(19) Europäisches Patentamt
European Patent Office
Office européen des brevets

(11) Publication number : **0 255 566 B1**

(12) **EUROPEAN PATENT SPECIFICATION**

(45) Date of publication of patent specification :
16.01.91 Bulletin 91/03

(51) Int. Cl.⁵ : **A01G 9/14**, A01G 13/02,
C08K 3/00

(21) Application number : 87101558.2

(22) Date of filing : 05.02.87

(54) Insect-repelling film or sheet.

(30) Priority : 06.08.86 JP 185852/86

(43) Date of publication of application :
10.02.88 Bulletin 88/06

(45) Publication of the grant of the patent :
16.01.91 Bulletin 91/03

(84) Designated Contracting States :
DE ES FR GB IT

(56) References cited :
FR-A- 1 112 597
GB-A- 1 052 998
GB-A- 1 058 013
GB-A- 2 158 833

(73) Proprietor : SUMITOMO CHEMICAL
COMPANY, LIMITED
Kitahama 4-chome 5-33
Chuo-ku Osaka 541 (JP)

(72) Inventor : Kitamura, Shuji
2-15-3, Kayogaoka
Nagaokakyo-shi Hyogo-fu (JP)
Inventor : Nakae, Kiyohiko
4-2-305, Ryodo-cho
Nishinomiya-shi Hyogo-ken (JP)
Inventor : Kotani, Kozo
1-6-8, Shiroyama-cho
Toyonaka-shi Osaka-fu (JP)
Inventor : Kume, Takanori
1-412, 1-9, Tamagawa
Takatsuki-shi Osaka-fu (JP)
Inventor : Negawa, Hideo
11-8-202, Sonehigashi-machi 2-chome
Toyonaka-shi Osaka-fu (JP)
Inventor : Ikeda, Tsuneta
2-12-4-304, Nishitsurugaoka, Ooi-cho
Iruma-gun Saitama-ken (JP)

(74) Representative : Vossius & Partner
Siebertstrasse 4 P.O. Box 86 07 67
D-8000 München 86 (DE)

## Description

This invention relates to an insect-repelling (pest repelling) film or sheet which is effective for repelling insects harmful to various plants such as crops and is useful in agriculture, forestry and gardening.

Hitherto there have been used various transparent or semi-transparent polyethylene films, ethylene-vinyl acetate copolymer films or soft vinyl chloride resin films for covering greenhouses or tunnels or covering the ground of crop plantation in the cultivation of vegetables, flowers, fruit trees, and the like. When covering greenhouses and tunnels, they are used for the purpose of promoting the growth of crops by maintaining the temperature within the houses and tunnels during the low temperature season and of saving energy for heating the houses in the very cold season. The covering of the ground of crop plantation, so-called "mulching", is usually done in order to keep the moisture in the soil, to raise the underground temperature and to prevent loss of fertilizer components.

Due to the recent increase of this cover culture, there occurs a severe problem of damage of crops by harmful insects. Particularly, in warm regions such as Okinawa, Kyushu and Shikoku, damage by thrips (e.g. Thrips palmi), aphides (e.g. Aphis gossypii, Mizus persieae), etc. has become a very severe problem.

In order to remove or prevent such a damage, it has been proposed to use agricultural chemicals such as repellents, insecticides, etc. or to trap or catch the insects with colored tapes, or with ferromone which effectively attracts insects, and some of these methods have been used in practice.

However, these methods entail some problems. For instance, agricultural chemicals give rise to the occurrence of resistant insects, when used for a long time, and hence, other chemicals having stronger insecticidal activity must be developed, which results occasionally in an increase of toxicity to human beings and further to secondary pollution such as environmental pollution due to increased deposition of the toxic chemicals in the soil.

There have also been proposed other methods for the removal of insects without involving the problems as mentioned above. For instance, covering films having a high reflectivity for sunlight (e.g. films with a layer of deposited aluminum) have been applied to the crop cultures or to the ground. Greenhouses or tunnels, too, have been covered with films which cut off close ultraviolet rays, in order to repel insects. Some of these methods have already been practised.

However, among the above methods, the former method brings about unfavorably high costs and further is not suitable for covering greenhouses or tunnels because of the low light permeability, not to mention its high light reflectivity. When used for mulching in ground cultures, the underground temperature is hardly raised. Hence, this method is used in practice for crop cultures only under specific circumstances which utilize said characteristics. The latter method is excellent for repelling insects from the covered houses and tunnels, but it unfavorably affects the growth of eggplants of the coloring of flowers, and hence its application is limited. Besides, it exhibits no repelling effect for insects in the case of mulching.

Under these circumstances, the present inventors have intensively searched for an improved product which is suitable for repelling pests, especially flying insects which are parasitic on crops, said product being further suitable for the protection of culture crops and for the promotion of their growth. This object has been achieved by the surprising finding that ultraviolet light having a specific wavelength which is reflected by some specific inorganic compounds is remarkably effective for repelling pests, especially insects, and that there can be obtained an excellent insect-repelling film or sheet by incorporating such specific inorganic compounds into the film or sheet.

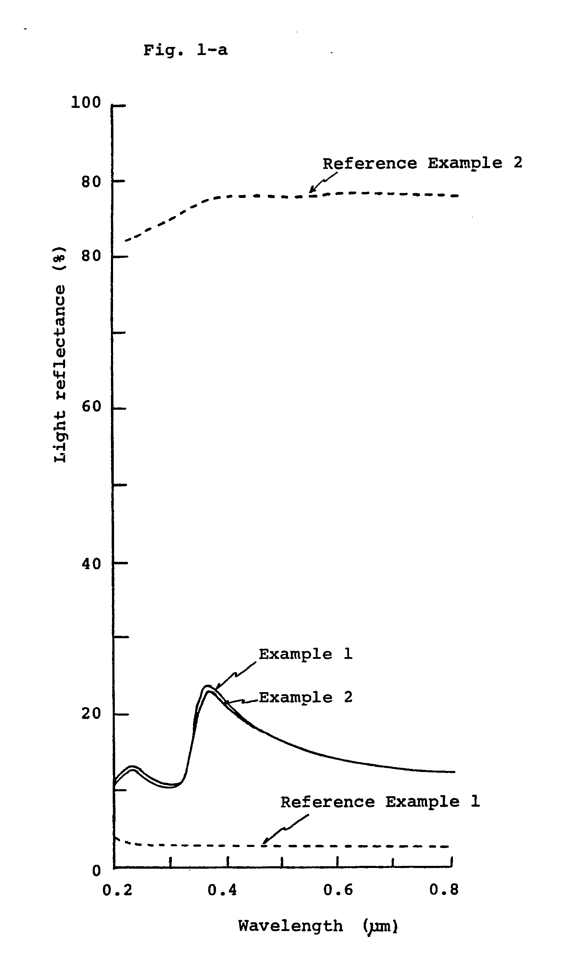

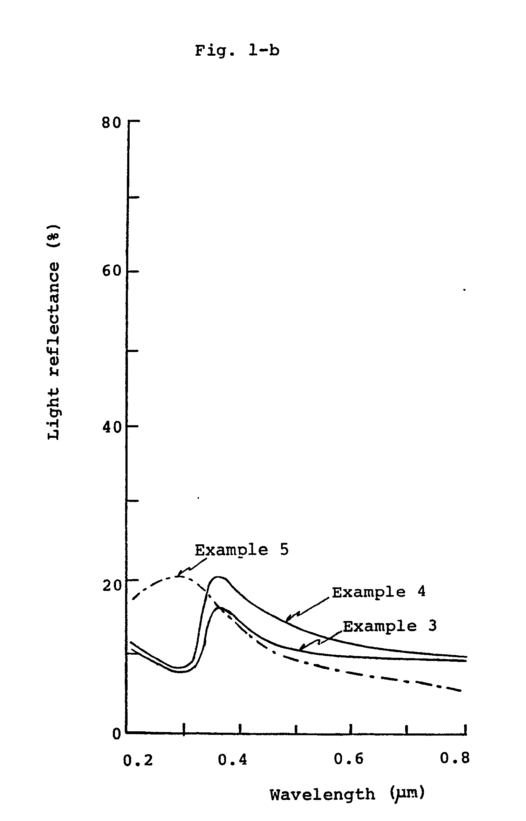

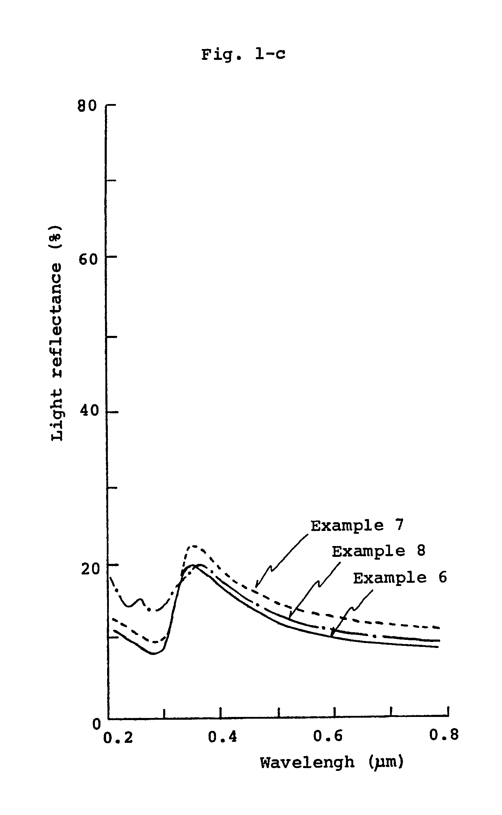

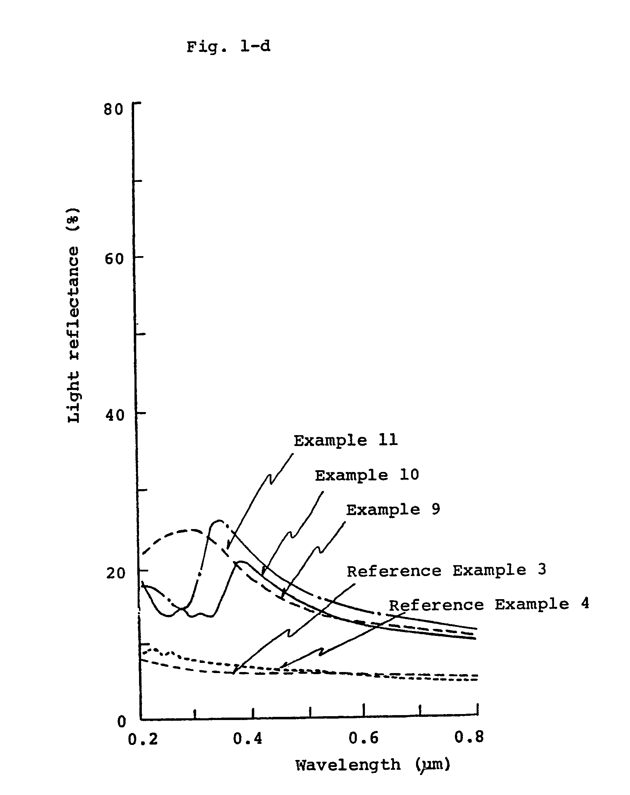

Fig. 1-a, Fig. 1-b, Fig. 1-c and Fig. 1-d each show a graph of the ultraviolet reflectance and visible light reflectance, respectively at a wavelength of 0.2 to 0.8 µm of the films produced in the Examples of this invention and in the Reference Examples for comparison.

This invention provides an insect-repelling film or sheet which exhibits a reflective spectrum in the ultraviolet region at a wavelength of less than 0.4 µm, particularly a reflective spectrum peak at a wavelength of less than 0.4 µm, and a reflective spectrum with a ratio $R_A/R_B$ of not less than 1.4. $R_A$ is the ultraviolet reflectance and $R_B$ is the visible light reflectance of a wavelength of 0.5 µm. The visible light transmission of the film or sheet is not less than 40%.

The starting resins used for the film or sheet of this invention include all kinds of conventional thermoplastic resins. Suitable examples of those resins are ethylene homopolymer or copolymers such as low-density polyethylene, high-density polyethylene, ethylene-butene-1 copolymers, ethylene-4-methylpentene-1 copolymers, ethylene-vinyl acetate copolymers, ethylene-acrylic acid copolymers, ethylene-methyl methacrylate copolymers, ethylene-vinyl acetate-methyl methacrylate copolymers, ethylene-ethyl acrylate copolymers, etc. ; polypropylene ; vinyl chloride resins ; and the like. These resins may be used alone or in combination of two or more thereof.

The insect-repelling film or sheet of this invention includes all kinds of films or sheets having the specific ultraviolet and visible light reflective spectra as mentioned above. It can be prepared by incorporating a specific inorganic compound having such reflective spectra into the resins as mentioned above.

The inorganic compound used in this invention includes all compounds having ultraviolet reflectance at a wavelength of less than 0.4 μm and preferably having a reflective peak in said region. The film or sheet containing at least one of said inorganic compounds exhibits such reflective spectrum characteristics that the ratio $R_A/R_B$ of the ultraviolet reflectance at a wavelength of less than 0.4 μm ($R_A$) and the visible light reflectance at a wavelength of 0.5 μm ($R_B$) is not less than 1.4, more preferably not less than 1.6. When the ratio of $R_A/R_B$ is less than 1.4, the film or sheet does not exhibit a sufficient insect-repelling effect. Besides, the film or sheet containing the inorganic compound has preferably a visible light transmission of not less than 40%, more preferably not less than 60%. The high visible light transmission is particularly important in view of the growth of plants when the film or sheet is used as cover for greenhouses or tunnels.

The inorganic compounds used in this invention include any kinds of compounds satisfying the above-mentioned conditions. Specific examples, are titanate compounds such as potassium titanate, calcium titanate, magnesium titanate, barium titanate, strontium titanate, lithium titanate, and aluminum silicate titanate; zirconium compounds such as zirconium silicate, and zirconium oxide. Among these compounds, potassium titanate, barium titanate, aluminum silicate titanate, zirconium silicate and zirconium oxide are particularly preferred, because they meet the demands of both high ultraviolet reflectance (high $R_A R_B$ ratio) and high visible light transmission.

The aluminum silicate titanate used in this invention is an oxide compound having the formula :

$$(SiO_2)_x \cdot (Al_2O_3)_y \cdot (TiO_2)_z \cdot nH_2O$$

wherein n is 0 or a positive integer. It has a $TiO_2$ content of 1 to 15% by weight, preferably 1.5 to 8.0% by weight. When the $TiO_2$ content of the oxide compound is less than the above lower limit, is shows unfavorably less ultraviolet reflectance. On the other hand, when the $TiO_2$ content is greater than the above upper limit, this leads to an unfavorable lowering of the visible light transmission property.

The inorganic compounds may be used in the form of powders or whiskers. The form of whiskers is preferred in view of the excellent strength and light reflective characteristics of the film or sheet. The amount of the inorganic compounds in the film or sheet is not critical as long as it is in a range so that the above-mentioned conditions are satisfied. The range of 0.2 to 20% by weight is preferred, more preferred is 0.5 to 5% by weight, based on the whole weight of the film or sheet, in view of a high ultraviolet reflectance without substantial decrease of the visible light transmission.

The film or sheet of this invention can be prepared, for example, by the following methods.

A thermoplastic resin composition and at least one of the inorganic compounds are mixed and kneaded in a conventional Banbury mixer, two roll kneader or extruding kneader, where the resin is molten and thoroughly mixed with the powdery inorganic compound. The kneaded composition thus prepared is formed into a film or sheet by means of a conventional processing machine as usually used in blown film processing, T-die film or sheet processing or calender processing.

The film or sheet of this invention may be a single layer film or sheet or a laminate film or sheet, i.e. a two-layer or three-layer laminate film or sheet, wherein a transparent layer of a thermoplastic resin is provided on at least one side of the film or sheet containing the inorganic compound. The laminate film or sheet can be prepared by extruding separately a resin composition containing an inorganic compound and a transparent composition of a thermoplastic resin from two extruders provided with a two layer extruder die to prepare a two-layer film or sheet, or by extruding separately a resin composition containing an inorganic compound as an intermediate layer and two transparent thermoplastic resin compositions as inner and outer layers on both sides of the intermediate layer with two extruders provided with a three-layer extruder die to prepare a three-layer film or sheet.

In these two-layer or three-layer laminate films or sheets, the resin for the transparent resin layers may be the same as or different from the resin containing the inorganic compound.

The insect-repelling film of this invention is preferably made of the most suitable thickness taking into consideration the balance of insect-repelling activity, profitability and easy handling. It is preferably in the range of 20 to 100 μm. In the case of two-or three-layer laminate films having a transparent film layer, the film containing the inorganic compound has preferably a thickness of 5 to 50 μm and the whole thickness of the laminate is preferably in the range of 10 to 100 μm. However, in the case of an insect-repelling sheet, the thickness is not necessarily restricted to a specific range, but may be in any range suitable for the required use.

When using the insect-repelling film wherein visible light permeation is not necessarily required, it may be adhered to a resin sheet, a wooden sheet, paper or cloth. When a transparent sheet is required, the film

3

can be adhered to a transparent resin sheet or a glass plate.

The insect-repelling film or sheet of this invention shows ultraviolet reflectivity at a specific wavelength and hence exhibits a repelling effect against various pests, especially insects such as thrips (e.g. Thrips palmi) and aphides (e.g. Aphis gossypii, Mizus persieae). It can be used as a cover for greenhouses and tunnels or for mulching of the ground for crop cultures or as a repellent for various insect pests in agriculture, forestry and gardening.

This invention is illustrated by the following examples but should not be construed to be limited thereto.

## Example 1

| Ingredients | Amount |
|---|---|
| Low-density polyethylene [density: 0.924 g/cm$^3$, melt index (MI): 1.5 g/10 min.] | 100 parts by weight |
| Potassium titanate whiskers (Tismo® D, $K_2O \cdot 6TiO_2$, manufactured by Otsuka Kagaku K.K.) | 2 " |
| Glycerine monostearate | 0.5 " |

To a mixture of the above ingredients a hindered amine light stabilizer is added (Tinuvin 622, manufactured by Ciba-Geigy, 0.1 part by weight), and the mixture is kneaded in a 5 liter Banbury mixer at a resin temperature of 150 - 160°C for 10 minutes and then extruded from an extruder to prepare granular pellets (the resulting composition is hereinafter referred to as "Resin Composition A").

The Resin Composition A is processed in a film-blowing apparatus at a melting zone temperature of 180°C and a die temperature of 180°C to obtain a film having a thickness of 30 μm.

The physical properties and activities of the film were tested. The results are shown in the accompanying Fig. 1-a and Tables 1 and 2.

## Example 2

In the same manner as described in Example 1 except that an ethylene-butene-1 copolymer (density: 0.925 g/cm³, MI : 2 g/10 min.) is used instead of the low-density polyethylene, there is obtained a film having a thickness of 20 μm.

The physical properties and activities of the film were tested, and the results are shown in Fig. 1-a and Tables 1 and 2.

## Example 3

| Ingredients | Amount |
|---|---|
| Ethylene-butene-1 copolymer [density: 0.925 g/cm$^3$, MI: 2 g/10 min.] | 100 parts by weight |
| Potassium titanate whiskers (Tismo® D, $K_2O \cdot 6TiO_2$, manufactured by Otsuka Kagaku K.K.) | 5 " |
| Glycerine monostearate | 0.8 " |

To a mixture of the above ingredients a hindered amine light stabilizer is added (Tinuvin 622, manufactured by Ciba-Geigy, 0.1 part by weight), and the mixture is treated in the same manner as described in Example 1 to obtain granular pellets (the resulting composition is hereinafter referred to as "Resin Compo-

4

sition B").

In the same manner as described above using the same ethylene-butene-1 copolymer, but no potassium titanate whiskers, there are prepared granular pellets (the composition is referred to as "Resin Composition C").

These resin compositions are processed using a two-layer film-blowing apparatus provided with two extruders and two layer dies. That is, the Resin Composition B and Resin Composition C are separately charged into two extruders and processed at a melting zone temperature of 220°C and a die temperature of 200°C. The Resin Compositions B and C are molten and adhere to each other to give a two-layer laminate film having a thickness ratio of B/C of 1/1 and a total thickness of 30 μm.

The physical properties and activities of the film were tested with the layer of the Resin Composition B at the outer side of the laminate film. The results are shown in the accompanying Fig. 1-b and Tables 1 and 2.

### Example 4

The Resin Composition B and Resin Composition C as obtained in Example 3 are processed using a multi-layer film blowing apparatus provided with two kinds of three layer dies. The Resin Composition B is supplied as the intermediate layer at a melting zone temperature of 190°C and a die temperature of 200°C and the Resin Composition C is supplied as the inner and outer layers at a melting zone temperature of 190°C and a die temperature of 190°C. The resin compositions adhere to each other within the dies to give a three-layer laminate film having a thickness of 5 μm (inner layer), of 10 μm (intermediate layer), of 5 μm (outer layer) and a total thickness of 20 μm.

The physical properties and activities of the film were tested. The results are shown in Fig. 1-b and Tables 1 and 2.

### Example 5

In the same manner as described in Example 1 except that zirconium silicate (A-PAX®, $ZrO_2$ :65.7 wt.% and $SiO_2$ : 33.3 wt.%, manufactured by Kinsei Kogyo K.K., 5 part by weight) is used instead of potassium titanate whiskers, a film having a thickness of 50 μm is obtained.

The physical properties and activities of the film were tested, and the results are shown in Fig. 1-b and Tables 1 and 2.

### Example 6

In the same manner as described in Example 1 except that powdery potassium titanate having an average particle size of 2.5 μm ($K_2O \cdot 6TiO_2$, manufactured by Kubota Tekko K.K., 5 parts by weight) is used instead of potassium titanate whiskers, there is obtained a film having a thickness of 50 μm.

The physical properties and activities of the film were tested, and the results are shown in Fig. 1-c and Tables 1 and 2.

### Example 7

In the same manner as described for the preparation of Resin Composition B in Example 3 except that calcium titanate (RC-17, $Ca \cdot TiO_3$, manufactured by Sumitomo Chemical Co., Ltd., 5 parts by weight) is used instead of potassium titanate whiskers, there is prepared a resin composition (hereinafter referred to as "Resin Composition D").

In the same manner as described in Example 4 except that Resin Composition D and Resin Composition C are used instead of Resin Compositions B and C, there is prepared a three layer laminate film having a thickness of 10 μm (inner layer), of 30 μm (intermediate layer), of 10 μm (outer layer), and a total thickness of 50 μm.

The physical properties and activities of the film were tested likewise. The results are shown in Fig. 1-c and Tables 1 and 2.

### Example 8

In the same manner as described for the preparation of Resin Composition B in Example 3 except that aluminum silicate titanate (an oxide compound containing $SiO_2$ :51 wt.%, $Al_2O_3$ :42 wt.% and $TiO_2$ :2.5 wt.%,

manufactured by Sumitomo Chemical Co., Ltd., 7 parts by weight) is used instead of potassium titanate whiskers, there is prepared a resin composition (hereinafter referred to as "Resin Composition E").

In the same manner as described in Example 4 except that Resin Composition E and Resin Composition C are used instead of Resin Compositions B and C, there is prepared a three layer laminate film having a thickness of 10 μm (inner layer), of 30 μm (intermediate layer), of 10 μm (outer layer) and a total thickness of 50 μm.

The physical properties and activities of the film were tested likewise. The results are shown in Fig. 1-c and Tables 1 and 2.

Reference Example 1

Using the Resin Composition C as used in Example 3 alone, there is obtained a single layer transparent blown film having a thickness of 30 μm.

The physical properties and activities of this film were tested. The results are shown in Fig. 1-a and Tables 1 and 2.

Reference Example 2

The physical properties and activities of a commercially available polyethylene film having a layer of deposited aluminum (manufactured by Reiko K.K., thickness : 50 μm) were tested. The results are shown in Fig. 1-a and Tables 1 and 2.

The physical properties and activities of the films obtained in Examples 1 to 8 and Reference Examples 1 and 2 were tested in the following manner.

(1) Total light transmission :

The total light transmission of the films was measured with a haze tester (manufactured by Toyo Seiki K.K.).

(2) Reflectance of ultraviolet and visible light :

The ultraviolet and visible light reflectances of the films were measured with an automatic recording spectrophotometer (type 330, manufactured by Hitachi Ltd.).

(3) Insect-repelling effect :

The film was applied for mulching onto a ridge (width : 1 m, length : 10 m, height : 20 cm) where cucumber was planted, and the number of Thrips palmi or Aphis gossypii (per 40 leaves) was counted for 30 days in summer season.

(4) Growth of crops :

In the same mulching experiment in which the film was used for testing the insect-repelling effect, the growth rate of cucumber was measured. The growth of good crop was evaluated in comparison with that of crop in the ridge onto which no mulching film was applied (the rate of the latter being counted as 100).

Table 1 (Physical properties of the films)

| | Examples | | | | Ref. Ex. | | Examples | | | |
|---|---|---|---|---|---|---|---|---|---|---|
| | 1 | 2 | 3 | 4 | 1 | 2 | 5 | 6 | 7 | 8 |
| Total light % transmission (%) | 71 | 70 | 66 | 82 | 92 | 0 | 75 | 84 | 84 | 86 |
| Ultraviolet reflective peak wavelength (µm) | 0.37 | 0.37 | 0.37 | 0.37 | - | - | 0.3 | 0.36 | 0.36 | 0.37 |
| Ultraviolet reflectance $R_A$ (%) | 24 | 23 | 16.5 | 21 | 3 | 88 | 20.5 | 20 | 23 | 20 |
| Reflectance at wavelength 0.5 µm $R_B$ (%) | 16 | 16 | 10 | 13 | 3 | 87 | 8.5 | 13 | 16 | 14 |
| $R_A/R_B$ | 1.50 | 1.44 | 1.65 | 1.62 | 1.00 | 1.01 | 2.41 | 1.54 | 1.44 | 1.43 |

EP 0 255 566 B1

Table 2 (Activities of the films)

| Insect-repelling activity | | Examples | | | | Ref. Ex. | | Examples | | | |
|---|---|---|---|---|---|---|---|---|---|---|---|
| | | 1 | 2 | 3 | 4 | 1 | 2 | 5 | 6 | 7 | 8 |
| | Thrips palmi (number/40 leaves) | 106 | 92 | 83 | 78 | 364 | 38 | 99 | 102 | 92 | 86 |
| | Aphis gossypii (number/40 leaves) | 121 | 88 | 105 | 101 | 408 | 21 | 111 | 130 | 96 | 97 |
| Growth of crop Rate of good crop (%) | | 140 | 155 | 155 | 160 | 120 | 120 | 160 | 140 | 160 | 160 |

## Example 9

In the same manner as described in Example 4 using the Resin Composition B and Resin composition C except that the thickness of each layer is changed, there is prepared a three layer laminate film having a thickness of 18.5 µm (inner layer), of 38 µm (intermediate layer), of 18.5 µm (outer layer) and a total thickness of 75 µm.

The physical properties and activities of the film were tested likewise. The results are shown in Fig. 1-d and Tables 3 and 4.

8

EP 0 255 566 B1

## Example 10

In the same manner as described for the preparation of Resin Composition B in Example 3 except that aluminum silicate titanate (an oxide compound containing $SiO_2$ :52.4 wt.%, $Al_2O_3$ :40.2 wt.% and $TiO_2$ :1.8 wt.%, manufactured by Sumitomo Chemical Co., Ltd., 12 parts by weight) is used instead of potassium titanate whiskers, there is prepared a resin composition (hereinafter referred to as "Resin Composition F").

In the same manner as described in Example 4 except that Resin Composition F and Resin Composition C are used instead of Resin Compositions B and C, there is prepared a three layer laminate film having a thickness of 15 μm (inner layer), of 45 μm (intermediate layer), of 15 μm (outer layer) and a total thickness of 75 μm.

The physical properties and activities of the film were tested likewise. The results are shown in Fig. 1-d and Tables 3 and 4.

## Example 11

In the same manner as described for the preparation of Resin Composition B in Example 3 except that zirconium silicate (A-PAX®, $ZrO_2$ :65.7 wt.% and $SiO_2$ :33.3 wt.%, manufactured by Kinsei Kogyo K.K., 6 parts by weight) is used instead of potassium titanate whiskers, there is prepared a resin composition (hereinafter referred to as "Resin Composition G").

In the same manner as described in Example 4 except that Resin Composition G and Resin Composition C are used instead of Resin Compositions B and C, there is prepared a three layer laminate film having a thickness of 15 μm (inner layer), of 45 μm (intermediate layer), of 15 μm (outer layer) and a total thickness of 75 μm.

The physical properties and activities of the film were tested likewise. The results are shown in Fig. 1-d and Tables 3 and 4.

## Reference Example 3

Using the Resin Composition B as used in Example 3 alone, there is obtained a single layer transparent blown film having a thickness of 75 μm.

The physical properties and activities of the film were tested likewise. The results are shown in Fig. 1-d and Tables 3 and 4.

## Reference Example 4

In the same manner as described for the preparation of Resin Composition B in Example 3 except that aluminum silicate (Kaolin clay, $SiO_2$ :46 wt.% and $Al_2O_3$ :37 wt.%, 12 parts by weight) is used instead of potassium titanate whiskers, there is prepared a resin composition (hereinafter referred to as "Resin Composition H").

In the same manner as described in Example 4 except that Resin Composition H and Resin Composition C are used instead of Resin Compositions B and C, there is prepared a three layer laminate film having a thickness of 15 μm (inner layer), of 45 μm (intermediate layer), of 15 μm (outer layer) and a total thickness of 75 μm.

The physical properties and activities of the film were tested likewise. The results are shown in Fig. 1-d and Tables 3 and 4.

The total light transmission and the reflectance of ultraviolet and visible light of the films as prepared in the above Examples 9 and 11 and Reference Examples 3 to 4 were tested in the same manner as described hereinbefore. Besides, the insect-repelling effect and the growth of crops were tested in the following manner.

(1) Insect-repelling effect :

A black polyethylene film was applied for mulching onto a ridge (width : 180 cm, length : 25 m, height: 20 cm) where melons were planted. Thereafter, the laminate films of the above Examples and Reference Examples were applied as a cover thereon in the form of a tunnel. The number of Aphis gossypii (alar insect) and Thrips palmi (imago and larva) which flew into the tunnel (per 40 leaves of melon) was counted for 30 days in spring season.

(2) Growth of crops :

Under the same cover in the form of a tunnel made of the laminate film as used in the test of the insect-repelling effect, the growth rate of the melons was measured. The rate of good crops was evaluated in comparison with that of crops in the ridge onto which no cover of the laminate film was applied (the rate of the latter being counted as 100).

### Table 3 (Physical properties of the films)

|  | Examples | | | Ref. Ex. | |
|---|---|---|---|---|---|
|  | 9 | 10 | 11 | 3 | 4 |
| Total light transmission (%) | 85 | 89 | 87 | 91 | 90 |
| Ultraviolet reflective peak wavelength (µm) | 0.37 | 0.38 | 0.30 | - | - |
| Ultraviolet reflectance $R_A$ (%) | 26 | 21 | 26 | 8 | 9 |
| Reflectance at wavelength 0.5 µm $R_B$ (%) | 16 | 14 | 15 | 7 | 7 |
| $R_A/R_B$ | 1.63 | 1.50 | 1.73 | 1.14 | 1.29 |

### Table 4 (Activities of the films)

|  | Examples | | | Ref. Ex. | |
|---|---|---|---|---|---|
|  | 9 | 10 | 11 | 3 | 4 |
| Insect-repelling activity | | | | | |
| Thrips palmi (number/40 leaves) | 32 | 58 | 46 | 244 | 266 |
| Aphis gossypii (number/40 leaves) | 19 | 36 | 30 | 118 | 109 |
| Growth of crop Rate of good crop (%) | 172 | 158 | 166 | 122 | 120 |

**Claims**

1. An insect-repelling film or sheet which has a reflective spectrum peak in the ultraviolet region at a wavelength of less than 0.4 μm, and a reflective spectrum with a ratio $R_A/R_B$ of not less than 1.4 wherein

$R_A$=ultraviolet reflectance, and

$R_B$=visible light reflectance at a wavelength of 0.5 μm.

2. The insect-repelling film or sheet according to claim 1 which has a visible light transmission of not less than 40%.

3. The insect-repelling film or sheet according to claim 1 which has an $R_A/R_B$ ratio of not less than 1.6 and a visible light transmission of not less than 60%.

4. The insect-repelling film or sheet according to claim 1, which comprises a thermoplastic resin composition containing an inorganic compound.

5. The insect-repelling film or sheet according to claim 4, wherein the inorganic compound is a titanate compound.

6. The insect-repelling film or sheet according to claim 4, wherein the inorganic compound is a zirconium compound.

7. The insect-repelling film or sheet according to claim 4, which comprises a layer of a resin composition containing at least one inorganic compound and at least one transparent layer of a resin composition on at least one side of the layer of the resin composition containing the inorganic compound.


**Ansprüche**

1. Insekten-abschreckende Folie oder Platte, die einen Reflektions-Spektrum-Peak im ultravioletten Bereich bei einer Wellenlänge von weniger als 0,4 μm und ein Reflektions-Spektrum mit einem Verhältnis $R_A/R_B$ von nicht weniger als 1,4 aufweist, Worin

$R_A$ das Vermögen ist, ultraviolettes Licht zu reflektieren und

$R_B$ das Vermögen ist, sichtbares Licht bei einer Wellenlänge von 0,5 μm zu reflektieren.

2. Insekten-abschreckende Folie oder Platte nach Anspruch 1, die eine Durchlässigkeit für sichtbares Licht von nicht weniger als 40% aufweist.

3. Insekten-abschreckende Folie oder Platte nach Anspruch 1, die ein $R_A/R_B$-Verhältnis von nicht weniger als 1,6 und eine Durchlässigkeit für sichtbares Licht von nicht weniger als 60% aufweist.

4. Insekten-abschreckende Folie oder Platte nach Anspruch 1, die eine thermoplastische Harzzusammensetzung umfaßt, die eine anorganische Verbindung enthält.

5. Insekten-abschreckende Folie oder Platte nach Anspruch 4, in der die anorganische Verbindung eine Titanatverbindung ist.

6. Insekten-abschreckende Folie oder Platte nach Anspruch 4, in der die anorganische Verbindung eine Zirkoniumverbindung ist.

7. Insekten-abschreckende Folie oder Platte nach Anspruch 4, umfassend eine Schicht aus einer Harzzusammensetzung, die mindestens eine anorganische Verbindung enthält und mindestens eine transparente Schicht aus einer Harzzusammensetzung auf mindestens einer Seite der Schicht aus der Harzzusammensetzung, die die anorganische Verbindung enthält.


**Revendications**

1. Un film ou une feuille insectifuge qui a un pic du spectre de réflexion dans la région de l'ultraviolet à une longueur d'onde inférieure à 0,4 μm, et un spectre de réflexion avec un rapport $R_A/R_B$ non inférieur à 1,4, où :

$R_A$=réflectance de l'ultraviolet, et

$R_B$=réflectance de la lumière visible à une longueur d'onde de 0,5 μm.

2. Le film ou la feuille insectifuge selon la revendication 1 qui a une transmission de la lumière visible non inférieure à 40%.

3. Le film ou la feuille insesctifuge selon la revendication 1 qui a un rapport $R_A/R_B$ non inférieur à 1,6 et une transmission de la lumière visible non inférieure à 60%.

4. Le film ou la feuille insectifuge selon la revendication 1, qui comprend une composition de résine thermoplastique contenant un composé inorganique.

5. Le film ou la feuille insectifuge selon la revendication 4, selon lequel le composé inorganique est un composé titanate.

6. Le film ou la feuille insectifuge selon la revendication 4, selon lequel le composé inorganique est un composé de zirconium.

7. Le film ou la feuille insectifuge selon la revendication 4, qui comprend une couche d'une composition de résine contenant au moins un composé inorganique et au moins une couche transparente d'une composition de résine sur au moins un côté de la couche de la composition de résine contenant le composé inorganique.

## Fig. 1-a

Fig. 1-b

Fig. 1-c

Fig. 1-d